# EUROPEAN PATENT SPECIFICATION

(11) **EP 3 409 896 B1**
(45) Date of publication and mention of the grant of the patent: **12.08.2020**
(21) Application number: 18164585.4
(22) Date of filing: 28.03.2018
(51) Int. Cl.: F01D 9/06

(54) **PRESSURE EQUALIZING ORIFICE FOR BAFFLES IN VANES**
DRUCKAUSGLEICHENDE ÖFFNUNG FÜR UMLENKBLECHE IN SCHAUFELN
ORIFICE D'ÉGALISATION DE PRESSION POUR CHICANES DANS DES AUBES

(30) Priority: 30.05.2017 US 201715608795
(43) Date of publication of application: 05.12.2018
(73) Proprietor: United Technologies Corporation, Farmington, CT 06032 (US)
(72) Inventor: SPANGLER, Brandon W., Vernon, CT 06066 (US); KOHLI, Atul, Tolland, CT 06084 (US)
(74) Representative: Dehns

(56) References cited:
- EP-A1- 2 927 428
- US-B1- 6 742 984

## Description

### BACKGROUND

Exemplary embodiments pertain to the art of baffle design and more specifically to baffles disposed in a vane cavity subject to a flow of cooling air.

With completely sealed baffles disposed in vane cavities in gas turbine engines under operating conditions, air inside the baffle may remain at atmospheric pressure while pressure in airflow outside of the baffle may be greater. Thick baffle walls or numerous ribs inside the baffle may be required to prevent the baffle from collapsing. The thick walls or extra ribs may result in extra weight and design complexity. Accordingly there is a need for a baffle design providing a lower pressure difference between the inside and outside of the baffle during operating conditions.

US 6742984 B1 and EP 2927428 A1 disclose baffles provided with impingement cooling holes.

### BRIEF DESCRIPTION

Viewed from one aspect the present invention provides a module for a gas turbine engine according to claim 1.

Disclosed is a module for a gas turbine engine, the module comprising a disk rotatable about an engine central axis and a vane fixedly disposed upstream of the disk, the vane being hollow and including a vane cavity, the vane cavity having a vane longitudinal span between a vane upstream opening and vane downstream opening, the vane including: a baffle fixedly supported within the vane cavity, the baffle having a hollow interior and having a baffle longitudinal span between a baffle upstream surface and a baffle downstream surface, the baffle longitudinal span being less than the vane longitudinal span to define a partial space eater baffle; and wherein a baffle opening area fluidly connects the vane cavity to the baffle interior, and the baffle opening area is between 32x10-5 square centimeters (5.0x10-5 square inches) to 9.7x10-3 square centimeters (1.5x10-3 square inches) The baffle opening area consist of a single opening in the baffle that fluidly connects the baffle interior with the vane cavity.

In addition to one or more of the features described above, or as an alternative, further embodiments may include a ratio of a baffle volume to a baffle opening area is between 25 centimeters (10 inches) and 1270 centimeters (500 inches).

In addition to one or more of the features described above, or as an alternative, further embodiments may include that a baffle volume is between 26x10-2 cubic centimeters (1.6x10-2 cubic inches) and 6.6 cubic centimeters (0.4 cubic inches)

In addition to one or more of the features described above, or as an alternative, further embodiments may include that a baffle longitudinal span is between 0.8 centimeters (0.3 inches) and 5.1 centimeters (2.0 inches)

In addition to one or more of the features described above, or as an alternative, further embodiments may include that the baffle upstream surface and baffle downstream surface each forms a wedge, and the baffle opening area is on a baffle upstream wedge vertex or a baffle downstream wedge vertex.

In addition to one or more of the features described above, or as an alternative, further embodiments may include that a baffle first side wall and a baffle second side wall, each baffle side wall extending between the baffle upstream surface and the baffle downstream surface, and the baffle opening area is on one or more of the baffle first side wall, the baffle second side wall, the baffle upstream surface and the baffle downstream surface.

In addition to one or more of the features described above, or as an alternative, further embodiments may include that the baffle downstream surface forms a wedge, and the baffle opening area is on a baffle side surface and on the baffle downstream vertex.

In addition to one or more of the features described above, or as an alternative, further embodiments may include that the baffle openings area is shaped as a circle, oval, racetrack or round-edge slot.

Further disclosed is a gas turbine engine comprising a module having one or more of the above features.

Viewed from one aspect the present invention provides a method according to claim 10.

Disclosed is a method of equalizing pressure between a cavity of a vane and an interior of a baffle disposed within the vane, wherein the vane is in a module within a gas turbine engine, the module includes a rotating disk and the vane is upstream of the rotating disk, the vane cavity having a vane longitudinal span between a vane upstream opening and vane downstream opening, the baffle having a baffle longitudinal span between a baffle upstream surface and a baffle downstream surface, the baffle longitudinal span being less than the vane longitudinal span to define a partial space eater baffle; the method comprising: transferring a flow of cooling air through the vane cavity, from a radial outer end of the vane cavity to a radial inner end of the vane cavity; and diverting a portion of flow of cooling air into a single baffle opening fluidly connecting the baffle cavity to the vane cavity; wherein a baffle opening area fluidly connects the vane cavity to the baffle interior, and the baffle opening area is between 32x10-5 square centimeters (5.0x10-5 square inches) to 9.7x10-3 square centimeters (1.5xl0-3 square inches). Moreover, the method may comprise one or more of the above disclosed features.

### BRIEF DESCRIPTION OF THE DRAWINGS

The following descriptions should not be considered limiting in any way. With reference to the accompanying drawings, like elements are numbered alike:
FIG. 1 is a partial cross section of a portion of a gas turbine engine according to an embodiment;
FIG. 2 illustrates baffles in a vane according to a disclosed embodiment;
FIGS. 3A-3D illustrate further details of baffles according to disclosed embodiments, where FIG. 3B illustrates the baffle of FIG. 3A cut along line B-B;
FIGS. 4A- 4B illustrate further details of baffles according to disclosed embodiments;
FIGS. 5A-5D illustrate baffles according to disclosed embodiments;
FIGS. 6A-6D illustrate baffles according to disclosed embodiments; and
FIGS. 7A- 7B illustrate additional baffles described for explanatory purposes.

### DETAILED DESCRIPTION

A detailed description of one or more embodiments of the disclosed apparatus and method are presented herein by way of exemplification and not limitation with reference to the Figures.

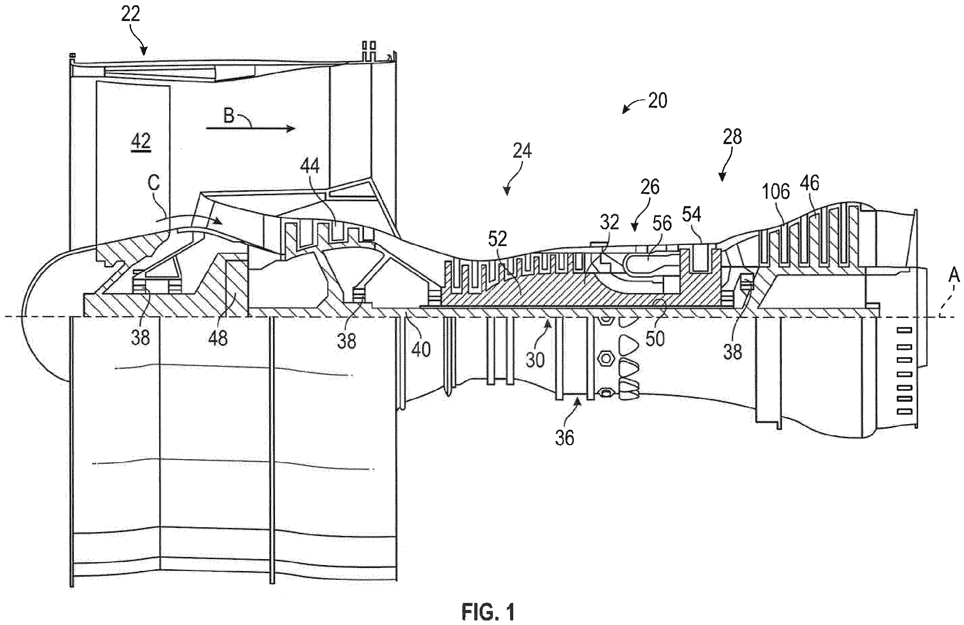

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. An engine static structure 36 is arranged generally between the high pressure turbine 54 and the low pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present disclosure is applicable to other gas turbine engines including direct drive turbofans.

A significant amount of thrust is provided by the bypass flow B due to the high bypass ratio. The fan section 22 of the engine 20 is designed for a particular flight condition--typically cruise at about 0.8Mach and about 10,688 meters (35,000 feet). The flight condition of 0.8 Mach and 10,688 meters (35,000 feet), with the engine at its best fuel consumption--also known as "bucket cruise Thrust Specific Fuel Consumption ('TSFC')"--is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R)/(518.7 °R)]^{0.5}. The "Low corrected fan tip speed" as disclosed herein according to one non-limiting embodiment is less than about 350.5 m/sec (1150 ft/second).

Further reference to features of the disclosed embodiments is made relative to a typical cylindrical coordinate system. The engine axis A illustrated in FIG. 1 is disposed along a longitudinal axis of the coordinate system and at a radial center or inner most portion of the coordinate system. The engine turbine section 28 is disposed downstream or aft of the compressor section 24.

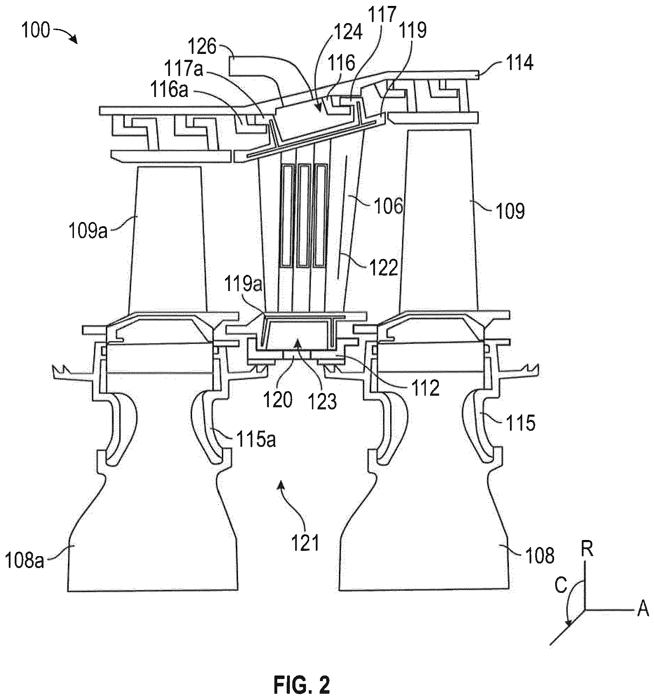

As illustrated in FIGS. 1 and 2, cooling designs in a turbine section 28 for a gas turbine engine 20 may utilize a vane **106** disposed between axially adjacent bladed full hoop disks **108, 108a** having respective blades **109, 109a.** Vane 106 may be disposed radially between an inner air seal **112** and a full hoop case **114** on an outer side. Inner air seal 112 may be a full hoop structure supported by opposing vanes, including vane 106, separated at one hundred and eighty (180) degrees in circumference. Vane 106 may be in turn supported by a full hoop case 114 through segmented vane hooks **117, 117a.** Full hoop cover plates **115, 115a** may minimize leakage between vane 106 and blades 109, 109a. Vane 106 may be radially supported by full hoop case 114 with segmented case hooks **116, 116a** in mechanical connection with segmented vane hooks **117, 117a.** Vane 106 maybe circumferentially supported between circumferentially adjacent vanes by feather seals **119, 119a** that may minimize leakage between the adjacent vanes into the gas path.

A turbine cooling air (TCA) conduit **126** may provide cooling air into an outer diameter vane cavity **124.** Vane 106 may be hollow so that air may travel radially into and longitudinally downstream through vane 106 via a central vane cavity **122,** and thereafter into a vane inner diameter cavity **123.** Thereafter air may travel through an orifice **120** in inner air seal 112 and into a rotor cavity **121.**

It is to be appreciated that the longitudinal orientation of vane 106 is illustrated in a radial direction, but other orientations for vane 106 are within the scope of the disclosure. In such alternate vane orientations, fluid such as cooling air flows into vane cavity 122 through an upstream opening illustrated herein as outer diameter cavity 124 and out through a downstream opening in vane cavity 122 illustrated herein as inner diameter cavity 123. A longitudinal span of vane cavity 122 being between such openings.

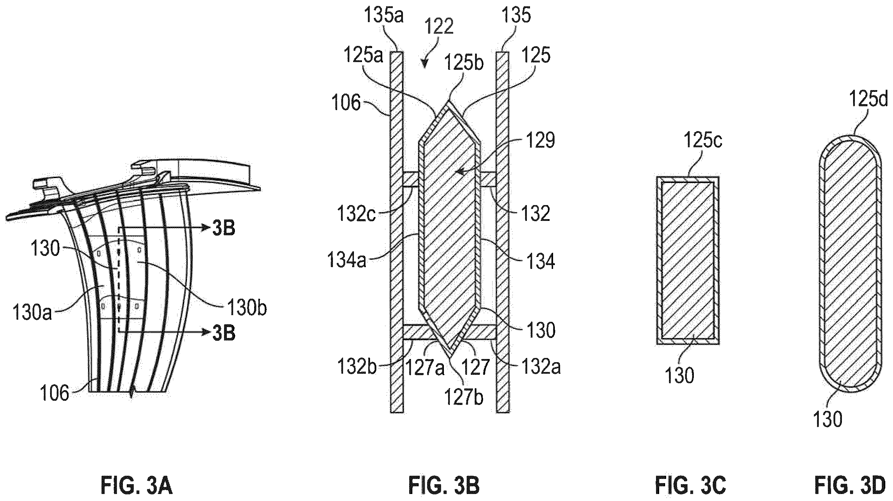

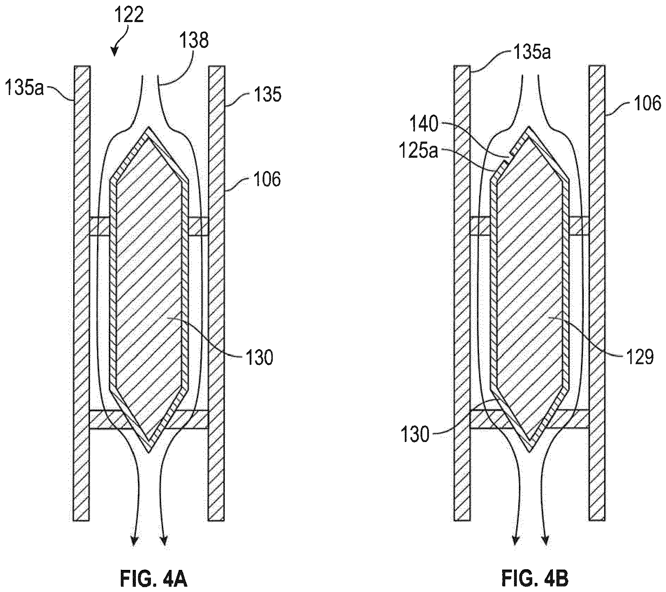

As illustrated in FIG. 3b, central vane cavity 122 may include longitudinally extending vane walls including suction-side vane wall **135** and pressure-side vane wall **135a** spaced therefrom. As illustrated in FIG. 4a, vane walls 135, 135a guide a flow **138** of turbine cooling air through vane 106.

As illustrated in FIG. 3a, within vane cavity 122 there may be one or more baffles 130, 130a, 130b, which may be partial space eater baffles which in the non-limiting illustration are axially adjacent and radially aligned with each other. The illustrated configuration is not intended to limit the number, shape or location of baffles within the guide vane 106. As illustrated in FIGS. 3a and 3b, partial space eater baffle 130 may have a smaller longitudinal span than the vane 106. Baffle 130 is illustrated as being centered within vane 106, but such position is not limiting.

Baffle 130 may be hollow and have an interior defining an internal baffle cavity 129. Baffle cavity 129 may have a plurality of baffle cavity walls, including longitudinal upstream walls 125, 125a, longitudinal downstream walls 127, 127a, a longitudinally extending suction-side wall 134 and a longitudinally extending pressure-side wall 134a. Though longitudinally extending side walls 134, 134a are illustrated herein as radially extending, it will be appreciated that the longitudinal orientation of the baffle 130 may be aligned with the longitudinal orientation of the vane 106.

Opposing end walls 125, 125a, 127, 127a meet at respective upstream apex 125b and downstream apex 127b to define respective profile shapes of an upstream and a downstream wedge. However, other shapes are known for the longitudinally outer walls of the partial space eater baffle 130, such as flat 125c in baffle 130 FIG. 3c and semi-circular 125d in baffle 130 in FIG. 3d. Baffle 130 may be positioned in vane 106 by baffle standoffs **132, 132a, 132b, 132c.**

During engine operating conditions, with cooling air flowing upstream to downstream within the vane 106 pressure inside baffle cavity 129 may be atmospheric and substantially lower than pressure within vane cavity 122. This differential pressure may subject baffle 130 to a collapse.

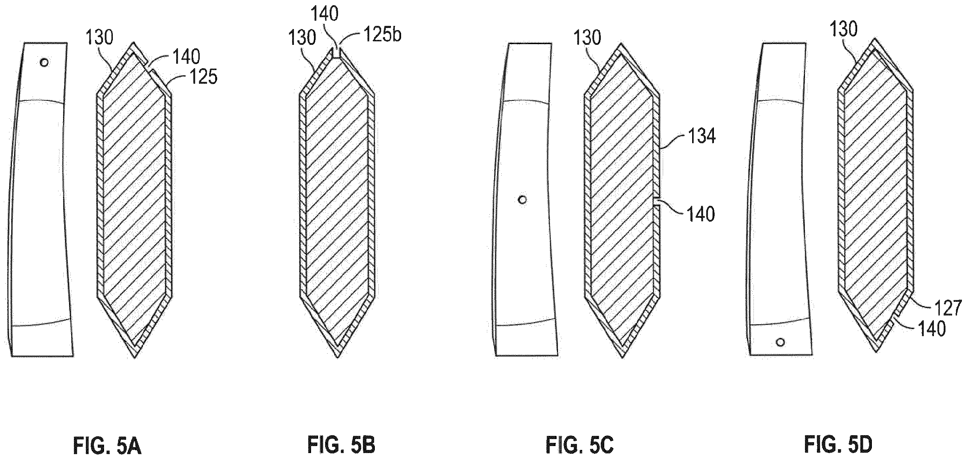

In FIG. 4b, in accordance with an exemplary embodiment of the invention baffle 130 may include an opening area defined by an opening **140** in upstream wall 125a of baffle 130, facing pressure-side wall 135a of vane 106. The opening 140 may pressurize the baffle cavity 129 at engine operating conditions. In FIG. 5a, opening 140 may be disposed on upstream wall 125 of baffle 130, facing suction-side wall 135 of vane 106. In FIG. 5b, opening 140 may be at upstream apex 125b of baffle 130. In FIG. 5c opening 140 may be on side wall 134 of baffle 130, facing suction-side wall 135 of vane 106. In FIG. 5d, opening 140 may be on downstream wall 127 of baffle 130, facing suction-side wall 135 of vane 106.

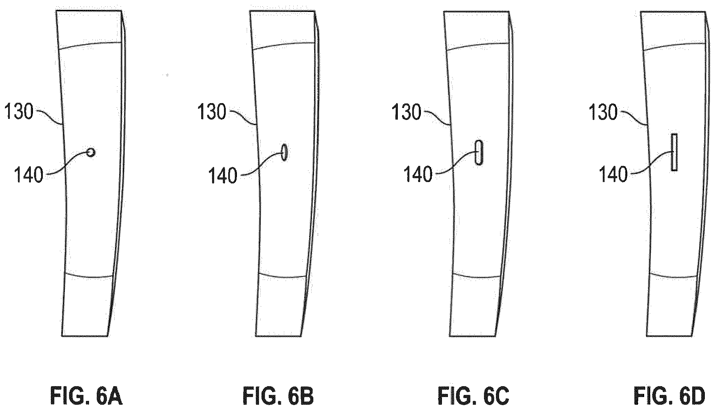

Turning to FIG. 6a, opening 140 in baffle 130 may be circular. In FIG. 6b, opening 140 may be oval. In FIG. 6c, opening 140 in baffle 130 may be in the shape of a racetrack or round-edged slot. In FIG. 6d, opening 140 in baffle 130 may be rectangular or in the shape of a square-edge slot. One of ordinary skill would recognize that the shapes illustrated herein are not limiting.

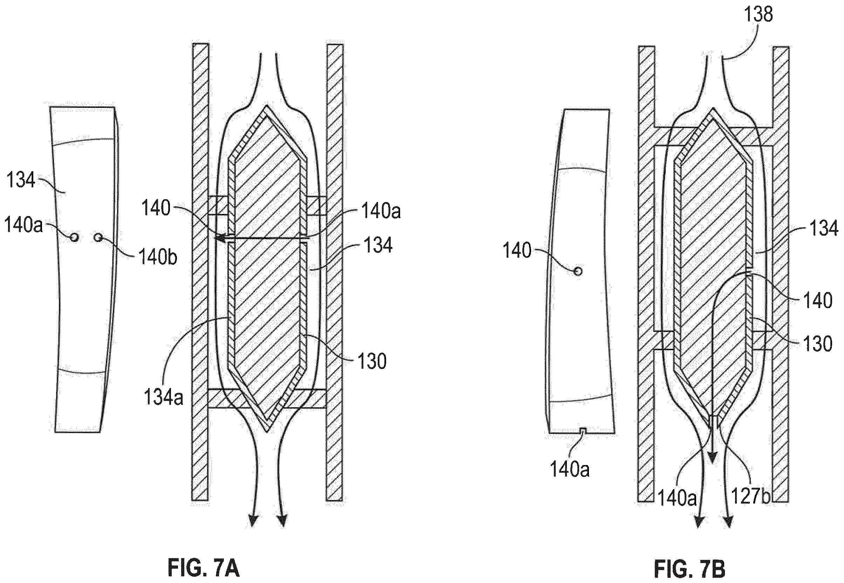

FIGS. 7a and 7b illustrate purely for explanatory purposes a plurality of openings in baffle 130. For example, in FIG. 7a, a plurality of openings 140, 140a, 140b may be distributed on both side walls 134, 134a of the baffle 130. In the illustration, there may be two openings, e.g., 140, 140b on each of the side walls 134, 134a, each being radially aligned. The plurality of openings may be used to ensure that pressures in and around the baffles 130 is equalized.

In FIG. 7b, plural openings 140, 140a are illustrated for explanatory purposes, one on side wall 134 of baffle 130 and one on downstream apex 127b of baffle 130. The combination of the two openings 140, 140a may allow some flow to travel through side wall 134a and exit apex 127b of baffle 130, filling in part of a wake generated by baffle 130, and merging in the same direction with cooling flow 138 outside baffle 130, which may minimizing pressure loss. Openings 140, 140a may be sized to tailor the flow in and around baffle 130. In addition, openings 140, 140a may be sized to keep a majority of the flow outside baffle 130.

To provide for pressure balancing, the baffle opening area may be between 32x10-5 square centimeters (5.0x10-5 square inches) to 9.7x10-3 square centimeters (1.5x10-3 square inches). For example, a ratio of a baffle volume to a baffle opening area may be between 25 centimeters (10 inches) and 1270 centimeters (500 inches), the baffle volume may be between 26x10-2 cubic centimeters (1.6x10-2 cubic inches) and 6.6 cubic centimeters (0.4 cubic inches), and in addition, baffle longitudinal span may be between 0.8 centimeters (0.3 inches) and 5.1 centimeters (2.0 inches)

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A module for a gas turbine engine, the module comprising:
a disk (108) rotatable about an engine central axis (A) and a vane (106) fixedly disposed upstream of the disk (108), the vane (106) being hollow and including a vane cavity (122), the vane cavity (122) having a vane longitudinal span between a vane upstream opening and vane downstream opening, the vane (106) including:
a baffle (130) fixedly supported within the vane cavity (122), the baffle (130) having a hollow interior (129) and having a baffle longitudinal span between a baffle upstream surface and a baffle downstream surface, the baffle longitudinal span being less than the vane longitudinal span to define a partial space eater baffle (130); and
wherein a baffle opening area fluidly connects the vane cavity (122) to the baffle interior (129), **characterised in that**
the baffle opening area is between 32x10⁻⁵ square centimeters (5.0x10⁻⁵ square inches) and 9.7x10⁻³ square centimeters (1.5x10-3 square inches) ;
wherein the baffle opening area consists of a single opening (140) in the baffle (130) that fluidly connects the baffle interior (129) with the vane cavity (122).

2. The module of claim 1, wherein a ratio of a baffle volume to a baffle opening area is between 25 centimeters (10 inches) and 1270 centimeters (500 inches)

3. The module of claim 1 or 2, wherein a baffle volume is between 26x10⁻² cubic centimeters (1.6x10⁻² cubic inches) and 6.6 cubic centimeters (0.4 cubic inches)

4. The module of claim 1, 2 or 3, wherein a baffle longitudinal span is between 0.8 centimeters (0.3 inches) and 5.1 centimeters (2.0 inches)

5. The module of any of claims 1 to 4, wherein the baffle upstream surface and baffle downstream surface each forms a wedge, and the baffle opening area is on a baffle upstream wedge vertex (125b) or a baffle downstream wedge vertex (127b).

6. The module of any of claims 1 to 5, wherein the baffle (130) includes a baffle first side wall (134) and a baffle second side wall (134a), each baffle side wall (134; 134a) extending between the baffle upstream surface and the baffle downstream surface, and the baffle opening area is on one or more of the baffle first side wall (134), the baffle second side wall (134a), the baffle upstream surface and the baffle downstream surface.

7. The module of any preceding claim, wherein the baffle opening area is shaped as a circle, oval, racetrack or round-edge slot (140).

8. A gas turbine engine, comprising a module as claimed in any of claims 1 to 7.

9. The engine of claim 8, Z wherein the single baffle opening (140) is shaped as a circle, oval, racetrack or round-edge slot.

10. A method of equalizing pressure between a cavity (122) of a vane (106) and an interior (129) of a baffle (130) disposed within the vane (106), wherein the vane (106) is in a module within a gas turbine engine, the module includes a rotating disk (108) and the vane (106) is upstream of the rotating disk (108),
the vane cavity (122) having a vane longitudinal span between a vane upstream opening and vane downstream opening, the baffle (130) having a baffle longitudinal span between a baffle upstream surface and a baffle downstream surface, the baffle longitudinal span being less than the vane longitudinal span to define a partial space eater baffle (130);
the method comprising:
transferring a flow of cooling air (138) through the vane cavity (122), from an upstream opening of the vane cavity (122) to a downstream opening of the vane cavity (122);
**characterised in that** the method comprises:
diverting a portion of flow of cooling air (138) into a single baffle opening (140) fluidly connecting the baffle cavity (129) to the vane cavity (122);
wherein a baffle opening area consists of the single opening (140) that fluidly connects the vane cavity (122) to the baffle interior (129), and the baffle opening area is between 32x10-5 square centimeters (5.0x10-5 square inches) to 9.7x10-3 square centimeters (1.5x10-3 square inches).

## Patentansprüche

1. Modul für ein Gasturbinentriebwerk, wobei das Modul Folgendes umfasst:
eine Scheibe (108), die um eine Mittelachse (A) des Triebwerks rotiert werden kann, und eine Leitschaufel (106), die fest stromaufwärts der Scheibe (108) angeordnet ist, wobei die Leitschaufel (106) ausgespart ist und einen Leitschaufelhohlraum (122) beinhaltet, wobei der Leitschaufelhohlraum (122) eine Längsspanne der Leitschaufel zwischen einer stromaufwärts gerichteten Öffnung der Leitschaufel und einer stromabwärts gerichteten Öffnung der Leitschaufel aufweist, wobei die Leitschaufel (106) Folgendes beinhaltet:
ein Umlenkblech (130), das fest innerhalb des Leitschaufelhohlraums (122) gestützt ist, wobei das Umlenkblech (130) einen hohlen Innenraum (129) aufweist und eine Längsspanne des Umlenkblechs zwischen einer stromaufwärts gerichteten Oberfläche des Umlenkblechs und einer stromabwärts gerichteten Oberfläche des Umlenkblechs aufweist, wobei die Längsspanne des Umlenkblechs geringer als die Längsspanne der Leitschaufel ist, um ein teilweise platzraubendes Umlenkblech (130) zu definieren; und
wobei ein Öffnungsbereich des Umlenkblechs den Leitschaufelhohlraum (122) fluidisch mit dem Umlenkblechinnenraum (129) verbindet, **dadurch gekennzeichnet, dass** der Öffnungsbereich des Umlenkblechs zwischen 32x10⁻⁵ Quadratzentimetern (5,0x10⁻⁵ Quadratzoll) und 9,7x10⁻³ Quadratzentimetern (1,5x10⁻³ Quadratzoll) ist;
wobei der Öffnungsbereich des Umlenkblechs aus einer einzelnen Öffnung (140) im Umlenkblech (130) besteht, die den Umlenkblechinnenraum (129) fluidisch mit dem Leitschaufelhohlraum (122) verbindet.

2. Modul nach Anspruch 1, wobei ein Verhältnis eines Umlenkblechvolumens zu einem Öffnungsbereich des Umlenkblechs zwischen 25 Zentimetern (10 Zoll) und 1270 Zentimetern (500 Zoll) ist.

3. Modul nach Anspruch 1 oder 2, wobei ein Umlenkblechvolumen zwischen 26x10⁻² Kubikzentimetern (1,6x10⁻² Kubikzoll) und 6,6 Kubikzentimetern (0,4 Kubikzoll) ist.

4. Modul nach Anspruch 1, 2 oder 3, wobei eine Längsspanne des Umlenkblechs zwischen 0,8 Zentimetern (0,3 Zoll) und 5,1 Zentimetern (2,0 Zoll) ist.

5. Modul nach einem der Ansprüche 1 bis 4, wobei jede der stromaufwärts gerichteten Oberfläche des Umlenkblechs und der stromabwärts gerichteten Oberfläche des Umlenkblechs einen Keil bildet, und der Öffnungsbereich des Umlenkblechs auf einer stromaufwärts gerichteten Keilspitze (125b) des Umlenkblechs oder einer stromabwärts gerichteten Keilspitze (127b) des Umlenkblechs ist.

6. Modul nach einem der Ansprüche 1 bis 5, wobei das Umlenkblech (130) eine erste Seitenwand (134) des Umlenkblechs und eine zweite Seitenwand (134a) des Umlenkblechs beinhaltet, wobei sich jede Seitenwand (134; 134a) des Umlenkblechs zwischen der stromaufwärts gerichteten Oberfläche des Umlenkblechs und der stromabwärts gerichteten Oberfläche des Umlenkblechs erstreckt und der Öffnungsbereich des Umlenkblechs auf einer oder mehreren der ersten Seitenwand (134) des Umlenkblechs, der zweiten Seitenwand (134a) des Umlenkblechs, der stromaufwärts gerichteten Oberfläche des Umlenkblechs und der stromabwärts gerichteten Oberfläche des Umlenkblechs ist.

7. Modul nach einem der vorhergehenden Ansprüche, wobei der Öffnungsbereich des Umlenkblechs als eines der Folgenden geformt ist: ein kreisförmiger, ovaler, rennbahnförmiger oder rundkantiger Schlitz (140).

8. Gasturbinentriebwerk, das ein Modul nach einem der Ansprüche 1 bis 7 umfasst.

9. Triebwerk nach Anspruch 8, wobei die einzelne Umlenkblechöffnung (140) als eines der Folgenden geformt ist:
ein kreisförmiger, ovaler, rennbahnförmiger oder rundkantiger Schlitz.

10. Verfahren für das Ausgleichen des Drucks zwischen einem Hohlraum (122) einer Leitschaufel (106) und einem Innenraum (129) eines Umlenkblechs (130), das innerhalb der Leitschaufel (106) angeordnet ist, wobei die Leitschaufel (106) in einem Modul innerhalb eines Gasturbinentriebwerks ist, das Modul eine rotierende Scheibe (108) beinhaltet und die Leitschaufel (106) stromaufwärts der rotierenden Scheibe (108) ist,
wobei der Leitschaufelhohlraum (122) eine Längsspanne der Leitschaufel zwischen einer stromaufwärts gerichteten Öffnung der Leitschaufel und einer stromabwärts gerichteten Öffnung der Leitschaufel aufweist, wobei das Umlenkblech (130) eine Längsspanne des Umlenkblechs zwischen einer stromaufwärts gerichteten Oberfläche des Umlenkblechs und einer stromabwärts gerichteten Oberfläche des Umlenkblechs aufweist, wobei die Längsspanne des Umlenkblechs geringer als die Längsspanne der Leitschaufel ist, um ein teilweise platzraubendes Umlenkblech (130) zu definieren;
wobei das Verfahren Folgendes umfasst:
Übertragen eines Kühlluftstroms (138) durch den Leitschaufelhohlraum (122) von einer stromaufwärts gerichteten Öffnung des Leitschaufelhohlraums (122) zu einer stromabwärts gerichteten Öffnung des Leitschaufelhohlraums (122);
**dadurch gekennzeichnet, dass** das Verfahren Folgendes umfasst:
Umlenken eines Abschnitts von Kühlluftstrom (138) in eine einzelne Umlenkblechöffnung (140), die den Umlenkblechhohlraum (129) fluidisch mit dem Leitschaufelhohlraum (122) verbindet;
wobei ein Öffnungsbereich des Umlenkblechs aus der einzelnen Öffnung (140) besteht, die den Leitschaufelhohlraum (122) fluidisch mit dem Umlenkblechinnenraum (129) verbindet, und der Öffnungsbereich des Umlenkblechs zwischen 32x10⁻⁵ Quadratzentimetern (5,0x10⁻⁵ Quadratzoll) und 9,7x10⁻³ Quadratzentimetern (1,5x10⁻³ Quadratzoll) ist.

## Revendications

1. Module pour un moteur à turbine à gaz, le module comprenant :
un disque (108) pouvant tourner autour d'un axe central (A) de moteur et une aube (106) disposée de manière fixe en amont du disque (108), l'aube (106) étant creuse et comportant une cavité d'aube (122), la cavité d'aube (122) ayant une envergure longitudinale d'aube entre une ouverture amont d'aube et une ouverture aval d'aube, l'aube (106) comportant :
un déflecteur (130) supporté de manière fixe à l'intérieur de la cavité d'aube (122), le déflecteur (130) ayant un intérieur creux (129) et ayant une envergure longitudinale de déflecteur entre une surface amont de déflecteur et une surface aval de déflecteur, l'envergure longitudinale de déflecteur étant inférieure à l'envergure longitudinale d'aube pour définir un déflecteur occupant partiellement l'espace (130) ; et
dans lequel une zone d'ouverture de déflecteur relie fluidiquement la cavité d'aube (122) à l'intérieur du déflecteur (129), **caractérisé en ce que**
la zone d'ouverture de déflecteur est comprise entre 32 x10⁻⁵ centimètres carrés (5,0 x 10⁻⁵ pouces carrés) et 9,7 x 10⁻³ centimètres carrés (1,5 x 10⁻³ pouces carrés) ;
dans lequel la zone d'ouverture de déflecteur est constituée d'une ouverture unique (140) dans le déflecteur (130) qui relie fluidiquement l'intérieur du déflecteur (129) à la cavité d'aube (122).

2. Module selon la revendication 1, dans lequel un rapport entre un volume de déflecteur et une zone d'ouverture de déflecteur est compris entre 25 centimètres (10 pouces) et 1 270 centimètres (500 pouces).

3. Module selon la revendication 1 ou 2, dans lequel un volume de déflecteur est compris entre 26 x 10⁻² centimètres cubes (1,6 x 10⁻² pouces cubes) et 6,6 centimètres cubes (0,4 pouce cube).

4. Module selon la revendication 1, 2 ou 3, dans lequel l'envergure longitudinale de déflecteur est comprise entre 0,8 centimètre (0,3 pouce) et 5,1 centimètres (2,0 pouces).

5. Module selon l'une quelconque des revendications 1 à 4, dans lequel la surface amont de déflecteur et la surface aval de déflecteur forment chacune un coin, et la zone d'ouverture de déflecteur se trouve sur un sommet de coin amont de déflecteur (125b) ou un sommet de coin aval de déflecteur (127b) .

6. Module selon l'une quelconque des revendications 1 à 5, dans lequel le déflecteur (130) comporte une première paroi latérale de déflecteur (134) et une seconde paroi latérale de déflecteur (134a), chaque paroi latérale de déflecteur (134 ; 134a) s'étendant entre la surface amont de déflecteur et la surface aval de déflecteur, et la zone d'ouverture de déflecteur se trouve sur une ou plusieurs de la première paroi latérale de déflecteur (134), de la seconde paroi latérale de déflecteur (134a), de la surface amont de déflecteur et de la surface aval de déflecteur.

7. Module selon une quelconque revendication précédente, dans lequel la zone d'ouverture de déflecteur a la forme d'une fente (140) circulaire, ovale, de piste ou à bord arrondi.

8. Moteur à turbine à gaz, comprenant un module selon l'une quelconque des revendications 1 à 7.

9. Moteur selon la revendication 8,
dans lequel l'ouverture unique (140) de déflecteur a la forme d'une fente circulaire, ovale, de piste ou à bord arrondi.

10. Procédé d'égalisation de pression entre une cavité (122) d'une aube (106) et un intérieur (129) d'un déflecteur (130) disposé à l'intérieur de l'aube (106), dans lequel l'aube (106) est dans un module à l'intérieur d'un moteur à turbine à gaz, le module comporte un disque rotatif (108) et l'aube (106) est en amont du disque rotatif (108),
la cavité d'aube (122) ayant une envergure longitudinale d'aube entre une ouverture amont d'aube et une ouverture aval d'aube, le déflecteur (130) ayant une envergure longitudinale de déflecteur entre une surface amont de déflecteur et une surface aval de déflecteur, l'envergure longitudinale de déflecteur étant inférieure à l'envergure longitudinale d'aube pour définir un déflecteur occupant partiellement l'espace (130) ;
le procédé comprenant :
le transfert d'un écoulement d'air de refroidissement (138) à travers la cavité d'aube (122), d'une ouverture amont de la cavité d'aube (122) vers une ouverture aval de la cavité d'aube (122) ;
**caractérisé en ce que** le procédé comprend :
la déviation d'une partie d'écoulement d'air de refroidissement (138) dans une ouverture unique (140) de déflecteur reliant fluidiquement la cavité de déflecteur (129) à la cavité d'aube (122) ;
dans lequel une zone d'ouverture de déflecteur est constituée de l'ouverture unique (140) qui relie fluidiquement la cavité d'aube (122) à l'intérieur du déflecteur (129), et la zone d'ouverture de déflecteur est comprise entre 32 x 10⁻⁵ centimètres carrés (5,0 x 10⁻⁵ pouces carrés) 9,7 x 10⁻³ centimètres carrés (1,5 x 10⁻³ pouces carrés).
